Europäisches Patentamt

European Patent Office

Office européen des brevets

(11) Publication number: **0 472 785 A1**

# EUROPEAN PATENT APPLICATION

(21) Application number: 90203499.0

(22) Date of filing: 24.12.90

(51) Int. Cl.5: **B60P 1/02**, B62D 23/00

(30) Priority: 28.08.90 IT 2131190

(43) Date of publication of application:
04.03.92 Bulletin 92/10

(84) Designated Contracting States:
AT BE CH DE DK ES FR GB GR LI LU NL SE

(71) Applicant: **SO.C.I.MI SOCIETA COSTRUZIONI INDUSTRIALI MILANO S.P.A.**
**Via Varesina 115**
**I-20156 Milan(IT)**

(72) Inventor: **Marzocco, Alessandro**
**Viale Monte Rosa 48**
**I-20149 Milan(IT)**

(74) Representative: **De Carli, Erberto et al**
**ING. BARZANO' & ZANARDO MILANO S.p.A.**
**Via Borgonuovo, 10**
**I-20121 Milano(IT)**

(54) Vehicle with a multifunctional load-carrying body.

(57) A vehicle with a multifunctional load-carrying body consisting of a front section (12) and a rear section (13) structurally connected together, and between which a third intermediate section (14) is slidingly inserted for loading passengers and/or goods and is also structurally connected to the first two but is able to slide vertically between them.

## Fig.1

This invention relates to a vehicle with a multifunctional load-carrying body, in particular a vehicle which can be easily adapted to transport either passengers or goods.

Current public transport vehicles have their floor at a height of at best not less than 45 cm from road level.

This means that an intermediate step has to be provided between the road and the floor.

Current research is underway for constructions which enable the maximum height of the floor from the road to be reduced in order to facilitate the entry or exit of passengers (who may be physically handicapped). Similar considerations also apply to goods transport in that lowering the floor would limit the extent to which goods would have to be lifted for loading and/or unloading, so simplifying the entire operation.

Vehicles have recently been constructed provided with sunken floors, but these have an integral structure and the height of their floor cannot be varied, however the biggest drawback is that they do not represent a modular vehicle of simple maintenance and use.

In this respect, such known vehicles have found rather limited application because of their limited manageability and their very complicated transmission systems.

The object of the present invention is to provide a modular vehicle with a multifunctional load-carrying body which overcomes all the drawbacks of the said known art.

This object is attained according to the present invention by a vehicle with a multifunctional load-carrying body, characterised by consisting of a first front section structurally connected to a second rear section, both sections being provided with rolling wheels, between said first and second section there being interposed a third load-carrying section slidingly mobile between a series of positions in the vertical direction by the action of lifting means, said third section being arranged to receive fixing means provided on said first and said second section and being in longitudinal communication with these latter, said third section also being provided with at least one side access opening.

Further according to the invention the first and second section are connected together by a reinforced box girder which joins together their respective top portions close to the roof of the vehicle, to create a free space for receiving the third section. The box girder houses a first portion of a connector for feeding a plurality of forms of energy required for energizing the services of the third load-carrying section, a further portion of the connector being provided on the third section.

The first and second section are provided with essentially vertical guides for receiving means for the sliding engagement of said third load-carrying section.

In a preferred embodiment of the present invention the lifting means consist of pneumatic cylinder-piston units provided on the first and second section and operationally connected to the third section by brackets.

The third section has a ribbed box structure, on the uprights of which there are provided bosses for receiving the fixing means in the form of mobile pins provided on the first and second section. The vehicle according to the present invention is further characterised in that the first front section is a control section with a driver's compartment and steered rolling wheels, the second rear section being a traction section housing a drive.

In a further embodiment, both the first and second sections are provided with respective drives.

Moreover, steered rolling wheels can be provided for both the first and the second section.

In a vehicle embodiment particularly suitable for passenger transport, the third load-carrying section is provided with two openings with respective doors.

Vertical guides for guiding the third section can also be provided between the first two to engage slide elements. The guides and slide elements can be mounted either on the third section or on the first two.

The structural and operational characteristics and advantages of a vehicle according to the present invention will be more apparent from the description given hereinafter by way of non-limiting example with reference to the accompanying drawings in which:

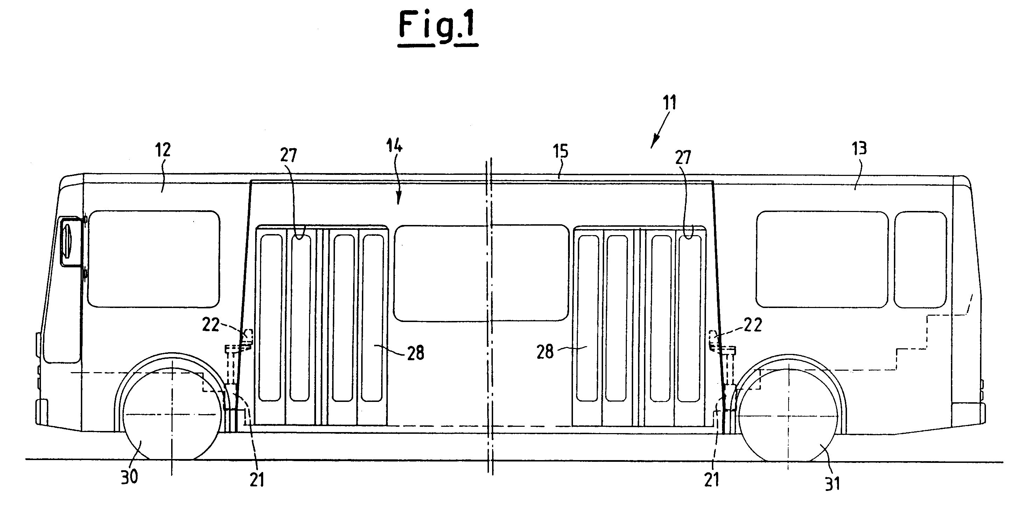

Figure 1 is a side view of a vehicle according to the present invention;

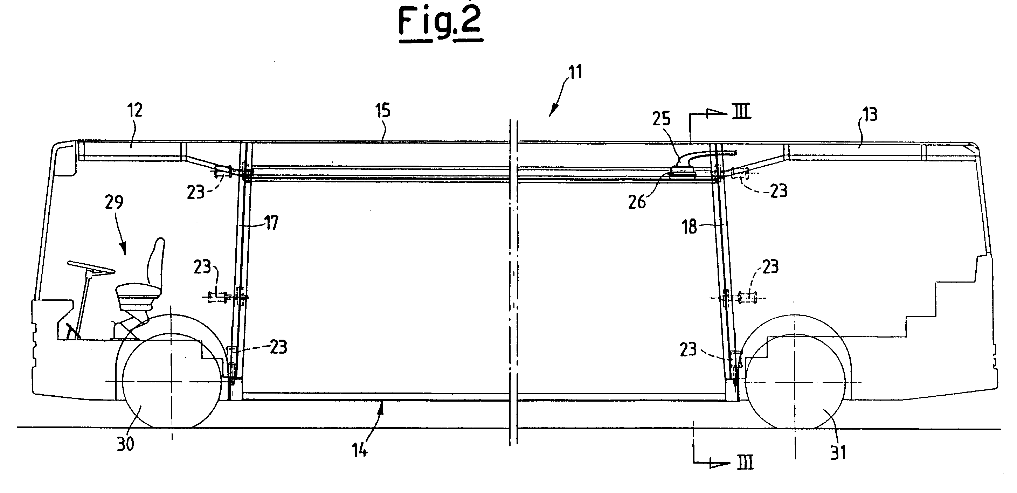

Figure 2 is a cross-section of Figure 1;

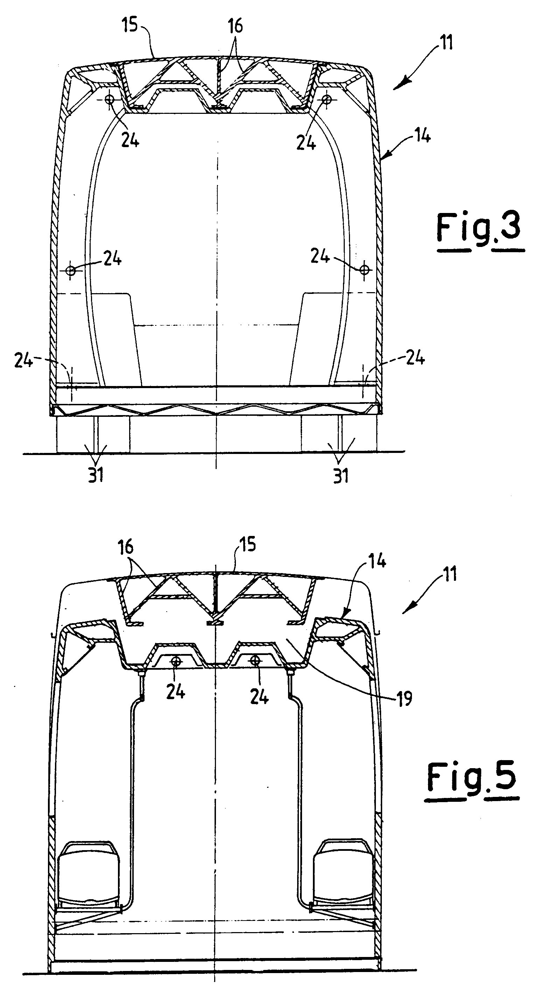

Figure 3 is a section on the line III-III of Figure 2;

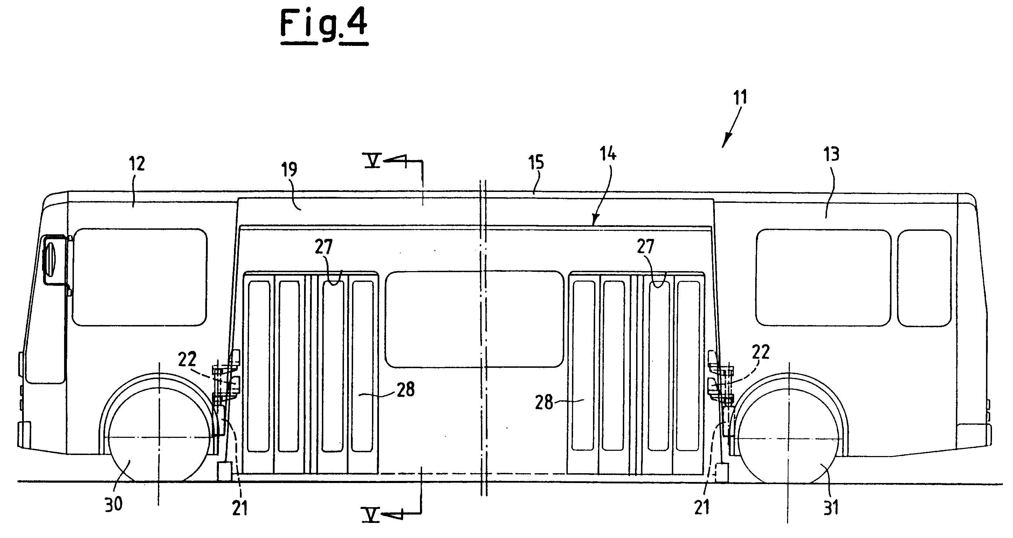

Figure 4 is a further side view of the vehicle of Figure 1 in a different operating position;

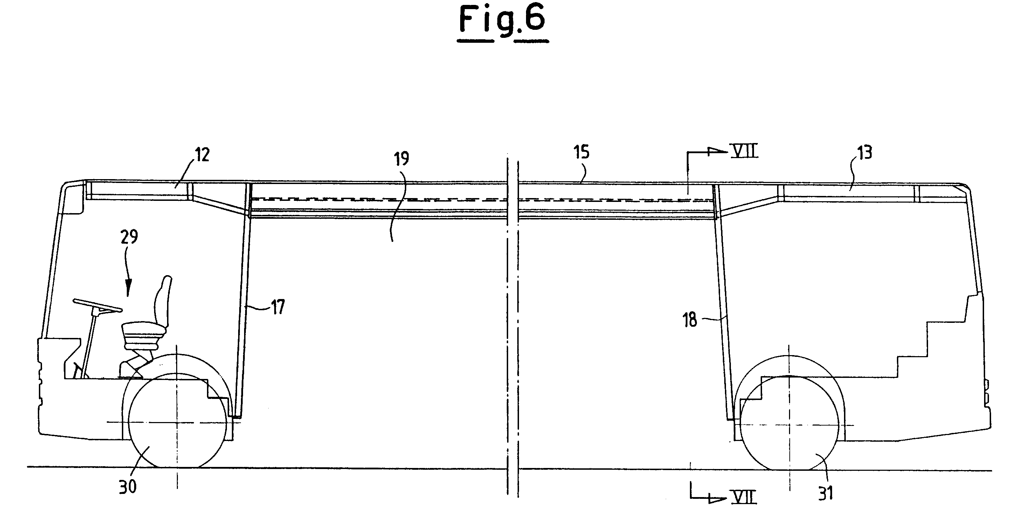

Figure 5 is a section on the line V-V of Figure 4;

Figure 6 is a partial cross-section through the vehicle of Figure 1;

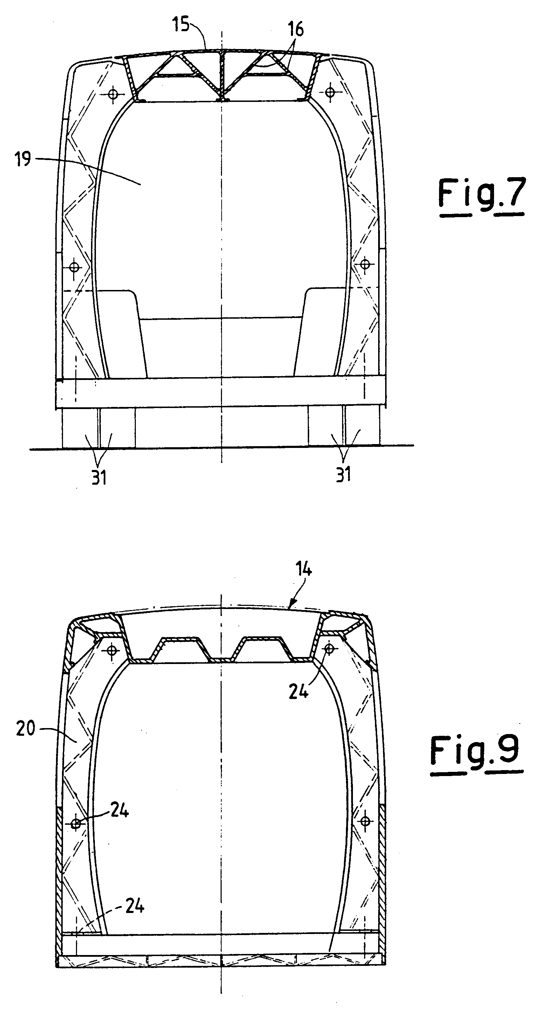

Figure 7 is a section on the line VII-VII of Figure 6;

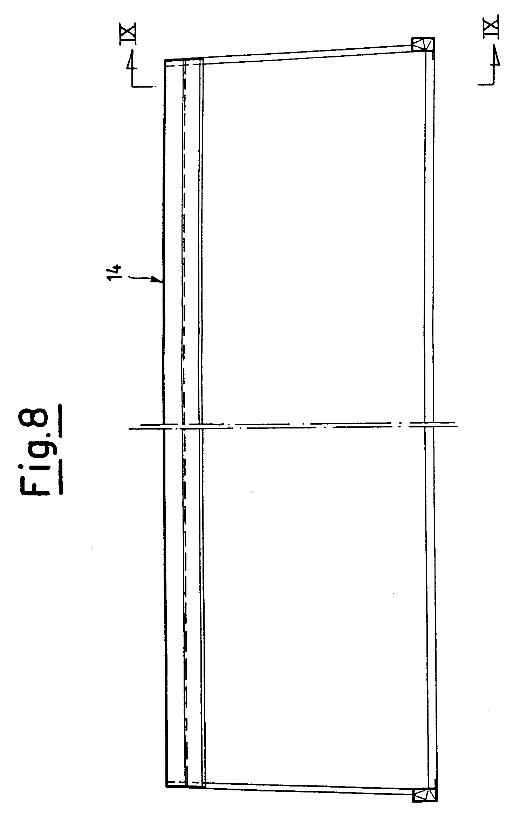

Figure 8 is a cross-section through an element of Figure 1; and

Figure 9 is a section on the line IX-IX of Figure 8.

In the figures the reference numeral 11 indicates overall a vehicle with a multifunctional load-carrying body according to the present invention, which consists essentially of a first front section 12, a second rear section 13 and a third load-carrying section 14 interposed between the first two.

The first two sections 12 and 13 are joined together structurally by a box girder 15 provided with strengthening elements 16.

Specifically, the girder 15 joins together the top portions 17 and 18 of the section 12 and section 13 respectively.

In this manner between the section 12 and section 13 a compartment 19 is formed into which the third load-carrying section 14 can be inserted.

This latter has a reinforced ribbed box structure 20 and communicates with the front section 12 and rear section 13, on which pneumatic cylinder-piston units 21 are provided to act as vertical lifting means for the load-carrying section 14 when within the compartment 19.

The pneumatic cylinder-piston units 21 are joined to the load-carrying section 14 by brackets 22. To ensure reliable locking of the load-carrying section 14 in the various predetermined vertical positions within the compartment 19, locking pins 23 are provided on the front section 12 and rear section 13, to be received in bushes 24 provided on the ribbed box structure of the load-carrying section 14.

To provide energy feed to the services of the load-carrying section 14 a multifunctional connector is provided, one half 25 of which is located on the box girder 15 and the other half 26 is situated (in a position corresponding with the first half) on the load-carrying section 14.

In the non-limiting embodiment shown in the accompanying figures the load-carrying section 14 shows two loading openings 27 closed by relative doors 28, of a type suitable for passenger access. Again in the illustrated embodiment, the front section 12 is a control section provided with a driver's compartment 29 and steered rolling wheels 30, whereas the rear section 13 is a traction section provided with a drive, not shown, and with rolling wheels 31 connected to said drive.

It should be noted that according to the invention both the first and the second section can be provided with respective drives and also possibly with steered wheels.

The load-carrying section 14 is slidingly movable within the compartment 19, to allow its floor level to be raised and lowered between a level suitable for the running of the vehicle and a level suitable for loading passengers and/or goods without having to use an intermediate step between the road level and the floor level and/or without having to use lifting means for loading said goods on board.

To further improve sliding reliability between the third section and the first two, guides can be provided on the first and second section and respective engagement elements on the third section. It is also possible to provide an embodiment in which the engagement elements are provided on the first two sections and the slide guides are rigid with the third section (these elements are not shown on the drawings).

## Claims

1. A vehicle with a multifunctional load-carrying body, characterised by consisting of a first front section structurally connected to a second rear section, both sections being provided with rolling wheels, between said first and second section there being interposed a third load-carrying section slidingly mobile between a series of positions in the vertical direction by the action of lifting means, said third section being arranged to receive fixing means provided on said first and said second section and being in longitudinal communication with these latter, said third section also being provided with at least one side access opening.

2. A vehicle as claimed in claim 1, characterised in that said first and second section are connected together by a reinforced box girder which joins together their respective top portions close to the roof of the vehicle, to create a free space for receiving the third section.

3. A vehicle as claimed in claim 1, characterised in that said first and second section are provided with essentially vertical guides for receiving means for the sliding engagement of said third load-carrying section.

4. A vehicle as claimed in claim land 2 characterised in that said box girder houses a first portion of a connector for feeding a plurality of forms of energy required for energizing the services of said third load-carrying section, a further portion of the connector being provided on said third section.

5. A vehicle as claimed in claim 1, characterised in that said lifting means consist of pneumatic cylinder-piston units provided on said first and second section and operationally connected to said third section by brackets.

6. A vehicle as claimed in claim 1, characterised in that said third section has a ribbed box structure, on the uprights of which there are provided bosses for receiving said fixing means in the form of mobile pins provided on said first and second section.

7. A vehicle as claimed in claim 1, characterised in that said first front section is a control section provided with a driver's compartment and steered rolling wheels, the second rear section being a traction section housing a drive.

8. A vehicle as claimed in claims 1 and 7, characterised in that both said first and second sections are provided with respective drives.

9. A vehicle as claimed in claim 1, characterised in that said first and second section are both provided with steered rolling wheels.

10. A vehicle as claimed in claim 1, characterised in that said third load-carrying section is provided with two openings with respective doors.

Fig.1

# Fig.2

_Fig.3_

_Fig.5_

7

# Fig.4

EP 0 472 785 A1

# Fig.6

EP 0 472 785 A1

Fig.7

Fig.9

# Fig.8

EP 0 472 785 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB - A - 2 104 036 (THE COCA-COLA COMPANY) * Fig. 1-3 * ---- | 1,2,5, 7 | B 60 P 1/02 B 62 D 23/00 |
| | | | TECHNICAL FIELDS SEARCHED (Int. Cl.5) |
| | | | B 62 D B 60 P |

The present search report has been drawn up for all claims

| Place of search | Date of completion of the search | Examiner |
|---|---|---|
| VIENNA | 11-07-1991 | SCHMICKL |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P0401)